# EUROPÄISCHE PATENTSCHRIFT

(11) **EP 2 329 228 B1**
(45) Veröffentlichungstag und Bekanntmachung des Hinweises auf die Patenterteilung: **31.07.2013**
(21) Anmeldenummer: 09780567.5
(22) Anmeldetag: 14.07.2009
(51) Int. Cl.: G01D 11/24

(54) **WINKELMESSEINRICHTUNG**
ANGLE MEASURING DEVICE
DISPOSITIF DE GONIOMÉTRIE

(30) Priorität: 20.09.2008 DE 102008048140
(43) Veröffentlichungstag der Anmeldung: 08.06.2011
(73) Patentinhaber: Dr. Johannes Heidenhain GmbH, 83301 Traunreut (DE)
(72) Erfinder: MARIC, Zlatko, 83278 Traunstein (DE); HÖFER, Volker, 83349 Palling (DE)
(86) Internationale Anmeldenummer: PCT/EP2009/058991
(87) Internationale Veröffentlichungsnummer: WO 2010/031608

(56) Entgegenhaltungen:
- WO-A2-2005/010940
- US-A- 5 852 413

## Beschreibung

Die Erfindung betrifft eine Winkelmesseinrichtung zur Bestimmung von Relativwinkelpositionen gemäß dem Anspruch 1.

Derartige Winkelmesseinrichtungen werden häufig zur Bestimmung der Winkellage zweier relativ zueinander drehbarer Maschinenteile verwendet und arbeiten beispielsweise nach einem optischen Messprinzip. Als drehbares Maschinenteil kommt beispielsweise ein Rotor einer Wafer-Inspektions-Anlage in Betracht. Derartige Anlagen werden üblicherweise in Reinräumen betrieben.

Aus der Patentveröffentlichung WO 2005/010940 A2 ist eine derartige Wafer-Inspektions-Antage bekannt, welche Vakuumanschlüsse zur Absaugung von Verunreinigungen aufweist. Weiterhin umfasst die dort offenbarte Anlage eine Winkelmesseinrichtung.

Der Erfindung liegt die Aufgabe zu Grunde, eine verbesserte Winkelmesseinrichtung zu schaffen, die auch in Umgebungen mit hohen Anforderungen an die Luftreinheit betreibbar ist.

Diese Aufgabe wird erfindungsgemäß durch die Merkmale des Anspruches 1 gelöst.

Demgemäß umfasst die Winkelmesseinrichtung eine erste Bauteilgruppe und eine zweite Bauteilgruppe, wobei die beiden Bauteilgruppen durch ein Lager, welches einen Lagerspalt aufweist, relativ um eine Achse zueinander drehbar angeordnet sind. Die erste Bauteilgruppe umfasst ein Gehäuse mit einer Anschlusseinrichtung sowie eine Abtasteinheit. Die zweite Bauteilgruppe umfasst eine Welle, an welcher eine Codescheibe befestigt ist sowie einen Strömungskanal, der mit einer Richtungskomponente parallel zur Achse verläuft. Die Codescheibe ist von der Abtasteinheit zur Bestimmung der relativen Winkellage der beiden Bauteilgruppen zueinander abtastbar. Weiterhin ist die Winkelmesseinrichtung so konfiguriert, dass
- an die Anschlusseinrichtung ein Unterdruck anlegbar ist, so dass ein die Winkelmesseinrichtung mit einem Druck umgebendes Fluid die Winkelmesseinrichtung zur Absaugung von Verunreinigungen durchströmt,
- bei angelegtem Unterdruck ein erster Massenstrom des Fluids, der durch den Strömungskanal strömt, größer ist als ein zweiter Massenstrom, der durch den Lagerspalt hindurch strömt.

Häufig ist das die Winkelmesseinrichtung umgebende Fluid Luft, so dass beispielsweise die Winkelmesseinrichtung von Luft durchströmbar ist. Insbesondere soll durch die Absaugung die Umgebung der Winkelmesseinrichtung von Verunreinigungen frei gehalten werden.

In Weiterbildung der Erfindung ist das Lager als Wälzlager ausgebildet. Das Lager weist mit Vorteil eine Dichtung auf, die insbesondere als eine berührungslose Dichtung ausgestaltet sein kann. Die Dichtung dient zur Begrenzung des zweiten Massenstroms, der durch den Lagerspalt hindurch strömt. Die berührungslose Dichtung kann beispielsweise als ein enger Spalt und / oder als eine Strömungsumlenkung, insbesondere als eine mehrfache Strömungsumlenkung ausgestaltet sein. Durch eine berührungslose Dichtung ist es möglich eine ausreichende Dichtwirkung zu erzielen, ohne dass von der Dichtung Verunreinigungen in Form von Abriebspartikeln erzeugt werden.

Wenn das Lager als Wälzlager ausgebildet ist und eine berührungslose Dichtung zur Begrenzung des zweiten Massenstroms, der durch den Lagerspalt hindurch strömt, aufweist, kann die Dichtung durch einen Spalt und / oder eine Strömungsumlenkung gebildet werden. Der Spalt und / oder die Strömungsumlenkung kann dann in vorteilhafter Weise durch Flächen begrenzt werden, die Bauteilen zugeordnet sind, welche gleichzeitig Laufflächen für Wälzkörper aufweisen.

Als Lagerspalt ist insbesondere der radiale Abstand im Bereich des Lagers zwischen den betreffenden Bauteilen der beiden Bauteilgruppen (Rotor und Stator) zu verstehen. Sofern das Lager als ein Wälzlager ausgestaltet ist, kann der Lagerspalt als radialer Abstand zwischen den Lagerringen, also den Körpern, welche Laufflächen für entsprechenden Wälzkörper aufweisen, gesehen werden.

Weiterhin kann die Welle einen axialen Strömungskanal aufweisen, der insbesondere als eine Bohrung ausgestaltet sein kann, wobei der Strömungskanal bei angelegtem Unterdruck vom Fluid durchströmbar ist.

Die beiden Bauteilgruppen können Bauteile aufweisen, die durch einen Spalt voneinander beabstandet sind, wobei ein Massenstrom durch diesen Spalt geführt wird und dieser Massenstrom die Summe des ersten Massenstroms und des zweiten Massenstroms ist.

In weiterer Ausgestaltung der Erfindung kann die Winkelmesseinrichtung eine Fluidführung aufweisen, welche vom Fluid durchströmbar ist und das Fluid mit radialer Richtungskomponente entlang des Lagers leitet. Die Fluidführung kann demnach so ausgestaltet sein, dass der erste Massenstrom mit radialer Richtungskomponente entlang des Lagers geleitet wird. Dadurch kann sichergestellt werden, dass Partikel, welche aus dem Lager herrühren, die Winkelmesseinrichtung nur durch die Absaugung verlassen.

Überdies kann die Fluidführung mehrere Ausnehmungen in einem Bauteil der ersten oder der zweiten Bauteilgruppe oder alternativ in Bauteilen beider Bauteilgruppen umfassen. In diesem Fall ist die Fluidführung somit durch Ausnehmungen realisiert. Insbesondere ist es vorteilhaft, wenn die Fluidführung mehrere Ausnehmungen in einem Bauteil umfasst. Mit Vorteil sind die Ausnehmungen nur in eines der Bauteile eingearbeitet. Weiterhin ist in vorteilhafter Weise das Bauteil, in welchem die Ausnehmungen eingearbeitet sind, der zweiten Bauteilgruppe zugeordnet.

Vorteilhafte Ausbildungen der Erfindung entnimmt man den abhängigen Ansprüchen.

Weitere Einzelheiten und Vorteile der erfindungsgemäßen Winkelmesseinrichtung ergeben sich aus der nachfolgenden Beschreibung eines Ausführungsbeispiels anhand der beiliegenden Figuren.

Es zeigen die
- Figur 1: Schnitt-Ansicht durch eine Winkelmesseinrichtung,
- Figur 2: ein Detail der Schnitt-Ansicht gemäß Figur 1,
- Figur 3: eine perspektivische Ansicht auf einen Rotorflansch und einen Statordeckel der Winkelmesseinrichtung.

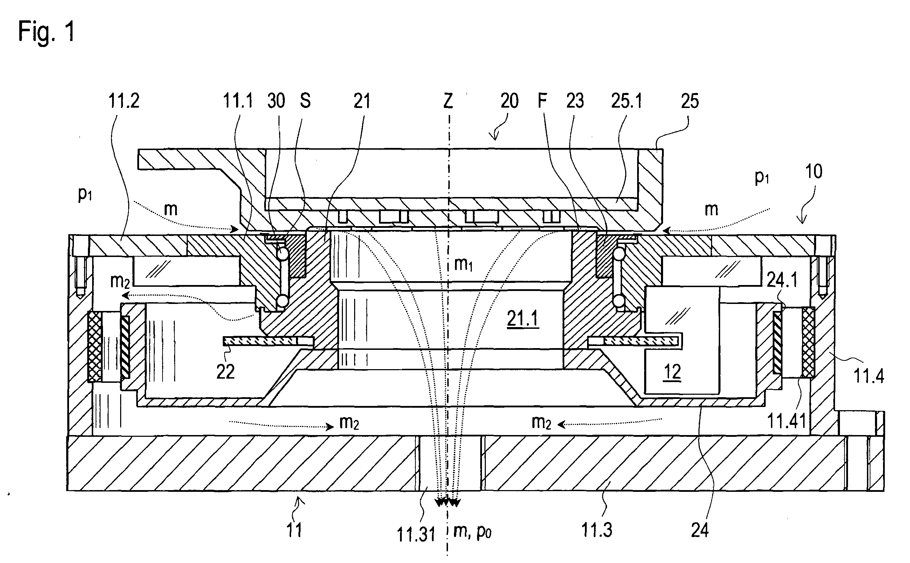

In der Figur 1 ist eine Schnittdarstellung durch eine Winkelmesseinrichtung gemäß einem Ausführungsbeispiel dargestellt. Die Winkelmesseinrichtung umfasst demnach eine erste Bauteilgruppe, hier in der Funktion eines Stators 10 und eine zweite Bauteilgruppe, im Ausführungsbeispiel als ein Rotor 20 wirkend. Rotor 20 und Stator 10 sind in einem Messbetrieb um eine Achse Z relativ zueinander drehbar angeordnet.

Der Stator 10 umfasst ein mehrteiliges Gehäuse 11, welches unter anderem aus einem Lagerring 11.1, einem oberen Gehäusedeckel 11.2, einem unteren Gehäuseflansch 11.3 und einem Gehäusering 11.4 besteht. Der Gehäusering 11.4 kann als statorseitiger Bestandteil eines Elektroantriebes gesehen werden, wobei an diesem Wicklungen 11.41 angeordnet sind. Am Lagerring 11.1 sind zudem zwei Laufflächen zur Führung von Wälzkörpern 30, hier in Form von Kugeln eingearbeitet.

Im Gehäuseflansch 11.3 ist eine Bohrung 11.31 mit einem Innengewinde vorgesehen, die als Anschlusseinrichtung dient und an welche ein Unterdruck p₀, z. B. mit Hilfe eines Rohrs oder Schlauchs, anlegbar ist.

Im vorgestellten Ausführungsbeispiel arbeitet die Winkelmesseinrichtung nach einem optischen Messprinzip. Entsprechend ist am Stator 10 weiterhin eine Abtasteinheit 12 in Form eines Abtastkopfes angeordnet, die drehfest mit dem zweiten Gehäuse 11 verbunden ist.

Der Rotor 20 umfasst im vorgestellten Ausführungsbeispiel eine Welle, welche eine zentrische axiale Bohrung 21.1 parallel zur Achse Z aufweist und somit als eine Hohlwelle 21 ausgestaltet ist. Die Bohrung 21.1 dient hier als Strömungskanal. An der Hohlwelle 21 ist eine Codescheibe 22 drehfest fixiert. Die Codescheibe 22 besteht im vorgestellten Ausführungsbeispiel aus Glas, auf welchem eine Strichcodierung aufgebracht ist. Die Strichcodierung kann entweder als eine inkrementale Skalierung und / oder als eine absolute Teilung vorliegen.

Der Codescheibe 22 gegenüber liegt die nicht drehbare Abtasteinheit 12. Die Abtasteinheit 12 besteht aus einer Lichtquelle, welche beispielsweise als LED ausgestaltet ist, einer Kondensorlinse und einem Maßstabssegment, sowie Fotodetektoren zum Empfangen der modulierten Lichtstrahlen. Durch die Fotodetektoren werden die Lichtsignale in positionsabhängige elektrische Signale umgewandelt.

Weiterhin ist an der Hohlwelle 21 ein innerer Lagerring 23 befestigt. Sowohl der innere Lagerring 23 als auch die Hohlwelle 21 weisen jeweils eine hochgenau bearbeitete Lauffläche zur Führung der Wälzkörper 30 auf. An der Hohlwelle 21 ist des Weiteren ein Körper 24 befestigt, der als Sekundärteil des Elektroantriebes dient und an dessen Außenumfang Permanentmagnete angordnet sind. Zudem ist an der Hohlwelle 21 ein Rotorflansch 25 festgelegt, in dem eine Verschlussscheibe 25.1 angeordnet ist.

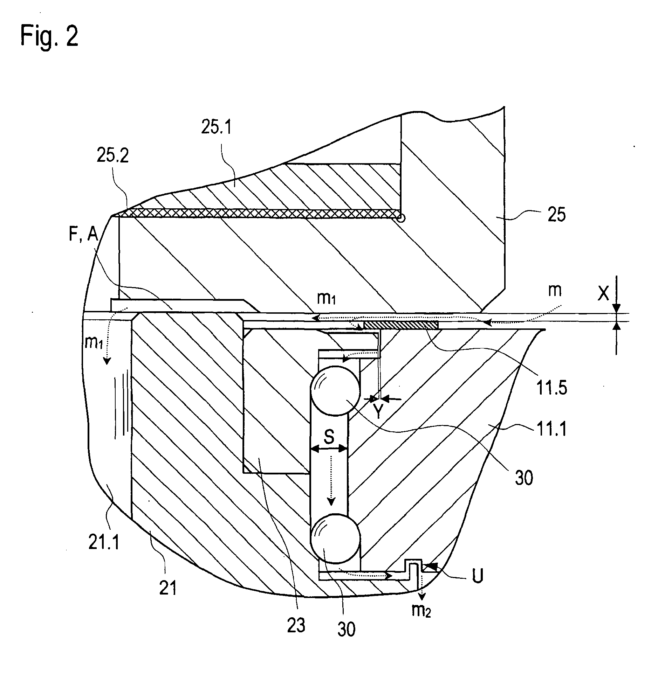

Gemäß der Figur 2 ist die Verschlussscheibe 25.1 mit Hilfe einer Klebeschicht 25.2 dichtend am Rotorflansch 25 angeordnet. Wie aus der Figur 2 ersichtlich, ist zudem am oberen Gehäusedeckel 11.1 ein Ring 11.5 befestigt.

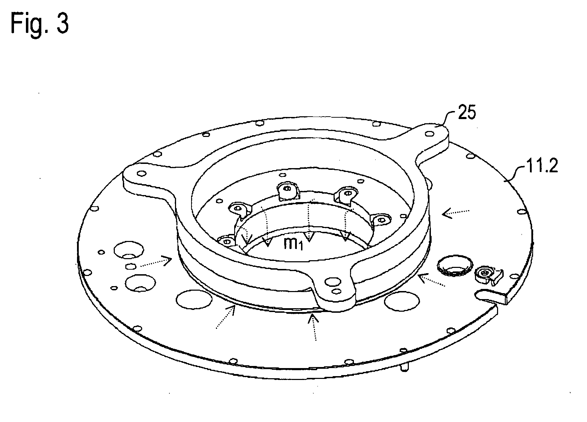

Die Figur 3 zeigt perspektivisch den oberen Gehäusedeckel 11.2 mit dem Rotorflansch 25 ohne Verschlussscheibe 25.1.

Im Betrieb der Winkelmesseinrichtung, die im gezeigten Ausführungsbeispiel Bestandteil einer Wafer-Inspektions-Anlage ist, wird am Rotorflansch 25 ein zu untersuchender Wafer befestigt. Der tatsächliche Schwenkwinkel der Hohlwelle 21 wird von der Abtasteinheit 12 im Zusammenwirken mit der Codescheibe 22 gemessen. Schwenkbewegungen können durch geeignetes bestromen der Wicklungen 11.41 erzeugt werden. Bei Anlegen des Unterdrucks p₀ an der Bohrung 11.31 des Gehäuseflansches 11.3 wird Luft mit einem Massenstrom m abgesaugt. Der Massenstrom m setzt sich zusammen aus einem ersten Massenstrom m₁ und einem zweiten Massenstrom m₂. Durch den abgesaugten Massenstrom m soll sichergestellt werden, dass keine Verunreinigungen im Bereich des zu untersuchenden Wafers vorliegen. Entsprechend darf der Massenstrom m bzw. der dazugehörige Volumenstrom ein vorgegebenes Mindestmaß nicht unterschreiten.

Naturgemäß entspricht der abgesaugte Massenstrom m dem Massenstrom wie er in die Winkelmesseinrichtung einströmt. Die die Winkelmesseinrichtung umgebende Luft weist den Druck p₁ auf, der größer ist als p₀. Entsprechend strömt in den Spalt zwischen dem Rotorflansch 25 und dem oberen Gehäusedeckel 11.1 Luft mit dem Massenstrom m ein und passiert in der Folge eine Engstelle in Form des Spaltes X zwischen einem Ring 11.5 und dem Rotorflansch 25. Danach teilt sich der angesaugte Massenstrom m in den ersten Massenstrom m₁ und den zweiten Massenstrom m₂ auf, wobei der erste Massenstrom m₁ wesentlich größer ist als der zweite Massenstrom m₂.

Der erste Massenstrom m₁ wird durch eine Fluidführung F in radialer Richtung geleitet, wobei die Fluidführung F durch mehrere radiale Ausnehmungen A im Rotorflansch 25 gebildet ist. Danach durchströmt der erste Massenstrom m₁ die axiale Bohrung 21.1 der Hohlwelle 21.

Durch die beschriebene Bauweise der Winkelmesseinrichtung bilden die Hohlwelle 21, der innere Lagering 23, die Wälzkörper 30 und der äußere Lagering 11.1 ein Lager mit einem Lagerspalt S. Dieses Lager, bzw. hier Wälzlager, weist eine spezielle Ausgestaltung auf, die von genormten Lagern abweicht, wobei diejenigen Bauteile, nämlich die Hohlwelle 21, der innere Lagering 23 und der äußere Lagering 11.1 sowohl Laufflächen für die Wälzkörper 30 aufweisen als auch Flächen, die - wie unten erläutert - zur Drosselung des Massenstroms m₂, welcher das Lager durchströmt, dienen. Diese Bauweise für das Lager ist besonders vorteilhaft, weil die Anzahl der extrem genau zu bearbeitenden Bauteile des Lagers auf ein Minimum reduziert werden kann.

Der zweite Massenstrom m₂ tritt zunächst zwischen dem inneren Lagerring 23 und dem oberen Gehäusedeckel 11.1 hindurch (vorbei an den Wälzkörpern 30). Dabei limitiert die Strömungsführung, insbesondere der enge Spalt Y den zweiten Massenstrom m₂ erheblich, wobei zudem durch eine enge Strömungsumlenkung U am Austritt des Lagers eine Erhöhung des Strömungswiderstands erreicht wird. Im gezeigten Ausführungsbeispiel beträgt die Breite des Spaltes Y lediglich 30 µm, so dass der zweite Massenstrom m₂ sehr gering ist und im Prinzip im Verhältnis zum ersten Massenstrom m₁ vernachlässigbar klein. Dadurch wird verhindert, dass Schmiermittel, welches sich im Bereich der Wälzkörper 30 befindet durch die Absaugung aus dem Lager in nennenswertem Maße abgesaugt wird. Dies hätte ansonsten einerseits den Nachteil, dass der Gleichlauf des Lagers bei schwindender Schmiermittelmenge gestört werden würde, andererseits würde durch das ausgetragene Schmiermittel die optische Messeinrichtung verunreinigt werden. Somit dienen der enge Spalt Y und die labyrinthartige Strömungsumlenkung U zwischen dem Lagerring 23 und der Hohlwelle 21 als Dichtung, insbesondere als Labyrinthdichtung zur Begrenzung des zweiten Massenstroms m₂.

Die Winkelmesseinrichtung ist also so konfiguriert, dass die die Winkelmesseinrichtung mit dem Druck p₁ umgebende Luft die Winkelmesseinrichtung zur Absaugung von Verunreinigungen durchströmt. Durch die Ausnehmungen A wird zunächst eine Luft- bzw. Fluidführung F geschaffen, die einen vergleichsweise geringen Druckverlust bzw. Strömungswiderstand aufweist. Andererseits wird durch die spezielle Gestaltung der Winkelmesseinrichtung erreicht, dass der zweite Massenstrom m₂ der Luft, welcher den anderen Weg nimmt und durch den Lagerspalt S hindurch strömt relativ klein ist und bei weitem kleiner als der erste Massenstrom m₁ der durch die Bohrung 21.1 strömt. Somit ist also der Druckverlust bzw. Strömungswiderstand für den zweiten Massenstrom m₂ wesentlich größer als für den ersten Massenstrom m₁. Durch die vorgestellte Konstruktion der Winkelmesseinrichtung wird sichergestellt, dass keine Verunreinigungen aus der Winkelmesseinrichtung austreten können, insbesondere können keine Verunreinigungen, z. B. Abriebspartikel, aus dem Lager austreten und beispielsweise den Wafer kontaminieren.

## Patentansprüche

1. Winkelmesseinrichtung umfassend eine erste Bauteilgruppe (10) und eine zweite Bauteilgruppe (20), wobei die Bauteilgruppen (10, 20) durch ein Lager (11.1, 21, 23, 30), welches einen Lagerspalt (S) aufweist, relativ um eine Achse (Z) zueinander drehbar angeordnet sind, und
die erste Bauteilgruppe (10)
e in Gehäuse (11) mit einer Anschlusseinrichtung (11.31), sowie
e ine Abtasteinheit (12) umfasst, und
die zweite Bauteilgruppe (20)
e ine Welle (21), an der eine Codescheibe (22) befestigt ist, sowie
e inen Strömungskanal (21.1) mit einer Richtungskomponente parallel zur Achse (Z) umfasst, wobei
die Codescheibe (22) von der Abtasteinheit (12) zur Bestimmung der relativen Winkellage der beiden Bauteilgruppen (10, 20) zueinander abtastbar ist, und die Winkelmesseinrichtung so konfiguriert ist, dass
- an die Anschlusseinrichtung (11.31) ein Unterdruck (p₀) anlegbar ist, so dass ein die Winkelmesseinrichtung mit einem Druck (p₁) umgebendes Fluid die Winkelmesseinrichtung zur Absaugung von Verunreinigungen durchströmt, und
- bei angelegtem Unterdruck (p₀) ein erster Massenstrom (m₁) des Fluids, der durch den Strömungskanal (21.1) strömt, größer ist als ein zweiter Massenstrom (m₂), der durch den Lagerspalt (S) hindurch strömt.

2. Winkelmesseinrichtung gemäß dem Anspruch 1, wobei das Lager (11.1, 21, 23, 30) als Wälzlager ausgebildet ist.

3. Winkelmesseinrichtung gemäß dem Anspruch 1 oder 2, wobei das Lager (11.1, 21, 23, 30) eine Dichtung aufweist zur Begrenzung des zweiten Massenstroms (m₂), der durch den Lagerspalt (S) hindurch strömt.

4. Winkelmesseinrichtung gemäß dem Anspruch 3, wobei die Dichtung als eine berührungslose Dichtung ausgestaltet ist.

5. Winkelmesseinrichtung gemäß dem Anspruch 1, wobei das Lager (11.1, 21, 23, 30) als Wälzlager mit Wälzkörpern (30) ausgebildet ist und eine berührungslose Dichtung aufweist zur Begrenzung des zweiten Massenstroms (m₂), der durch den Lagerspalt (S) hindurch strömt, wobei die Dichtung durch einen Spalt (Y) und / oder eine Strömungsumlenkung (U) gebildet wird und der Spalt (Y) und / oder die Strömungsumlenkung (U) durch Flächen begrenzt werden, die Bauteilen (11.1, 21, 23) zugeordnet sind, welche gleichzeitig Laufflächen für die Wälzkörper (30) aufweisen.

6. Winkelmesseinrichtung gemäß einem der vorhergehenden Ansprüche, wobei die Welle (21) den Strömungskanal (21.1) aufweist, welcher bei angelegtem Unterdruck (p₀) vom Fluid durchströmt wird.

7. Winkelmesseinrichtung gemäß einem der vorhergehenden Ansprüche, wobei die erste Bauteilgruppe (10) und die zweite Bauteilgruppe (20) jeweils Bauteile (25; 11.1) aufweisen, die durch einen Spalt (X) voneinander beabstandet sind und ein Massenstrom (m) durch diesen Spalt (X) geführt wird, wobei der Massenstrom (m) die Summe des ersten Massenstroms (m₁) und des zweiten Massenstroms (m₂) ist.

8. Winkelmesseinrichtung gemäß einem der vorhergehenden Ansprüche, wobei die Winkelmesseinrichtung eine Fluidführung (F) aufweist, welche vom Fluid durchströmbar ist und das Fluid mit radialer Richtungskomponente leitet.

9. Winkelmesseinrichtung gemäß einem der vorhergehenden Ansprüche, wobei die Fluidführung (F) mehrere Ausnehmungen (A) in einem Bauteil (25) der ersten und / oder der zweiten Bauteilgruppe (10; 20) umfasst.

10. Winkelmesseinrichtung gemäß einem der vorhergehenden Ansprüche, wobei die Fluidführung (F) mehrere Ausnehmungen (A) in der zweiten Bauteilgruppe (10; 20) umfasst.

## Claims

1. Angle measuring device comprising a first component assembly (10) and a second component assembly (20), the component assemblies (10, 20) being arranged such that they can be rotated relative to one another about an axis (Z) by way of a bearing (11.1, 21, 23, 30) which has a bearing gap (S), and
the first component assembly (10) comprising
• a housing (11) with a connector device (11.31), and
• a sensing unit (12), and
the second component assembly (20) comprising
• a shaft (21), to which a coding disc (22) is fastened, and
• a flow channel (21.1) with a direction component parallel to the axis (Z),
it being possible for the coding disc (22) to be sensed by the sensing unit (12) in order to determine the relative angular position of the two component assemblies (10, 20) with respect to one another, and the angle measuring device being configured in such a way that
- a vacuum (p₀) can be applied to the connector device (11.31), with the result that a fluid which surrounds the angle measuring device at a pressure (p₁) flows through the angle measuring device in order to extract contaminants, and,
- when a vacuum (p₀) is applied, a first mass flow (m₁) of the fluid which flows through the flow channel (21.1) is greater than a second mass flow (m₂) which flows through the bearing gap (S).

2. Angle measuring device according to Claim 1, the bearing (11.1, 21, 23, 30) being configured as an antifriction bearing.

3. Angle measuring device according to Claim 1 or 2, the bearing (11.1, 21, 23, 30) having a seal in order to limit the second mass flow (m₂) which flows through the bearing gap (S).

4. Angle measuring device according to Claim 3, the seal being configured as a contactless seal.

5. Angle measuring device according to Claim 1, the bearing (11.1, 21, 23, 30) being configured as an antifriction bearing with rolling bodies (30) and having a contactless seal for limiting the second mass flow (m₂) which flows through the bearing gap (S), the seal being formed by a gap (Y) and/or a flow deflection means (U) and the gap (Y) and/or the flow deflection means (U) being delimited by surfaces which are assigned to components (11.1, 21, 23) which at the same time have running faces for the rolling bodies (30).

6. Angle measuring device according to one of the preceding claims, the shaft (21) having the flow channel (21.1) which is flowed through by the fluid when the vacuum (p₀) is applied.

7. Angle measuring device according to one of the preceding claims, the first component assembly (10) and the second component assembly (20) in each case having components (25; 11.1) which are spaced apart from one another by a gap (X) and a mass flow (m) being guided through the said gap (X), the mass flow (m) being the sum of the first mass flow (m₁) and the second mass flow (m₂) .

8. Angle measuring device according to one of the preceding claims, the angle measuring device having a fluid guide (F) which can be flowed through by the fluid and guides the fluid with a radial direction component.

9. Angle measuring device according to one of the preceding claims, the fluid guide (F) comprising a plurality of recesses (A) in a component (25) of the first and/or the second component assembly (10; 20).

10. Angle measuring device according to one of the preceding claims, the fluid guide (F) comprising a plurality of recesses (A) in the second component assembly (20).

## Revendications

1. Dispositif de mesure angulaire comportant un premier groupe de composants (10) et un deuxième groupe de composants (20), les groupes de composants (10, 20) étant disposés de manière à pouvoir tourner relativement l'un par rapport à l'autre autour d'un axe (Z) au moyen d'un palier (11.1, 21, 23, 30) qui présente un interstice de palier (S) et
le premier groupe de composants (10) comportant
• un boîtier (11) comprenant un dispositif de raccordement (11.31)
• ainsi qu'une unité de balayage (12) et
le deuxième groupe de composants (20) comportant
• un arbre (21) auquel est fixé un disque codeur (22)
• ainsi qu'un conduit d'écoulement (21.1) présentant une composante directionnelle parallèle à l'axe (Z),
le disque codeur (22) pouvant être balayé par l'unité de balayage (12) pour la détermination de la position angulaire relative des deux groupes de composants (10, 20) l'un par rapport à l'autre et le dispositif de mesure angulaire étant configuré de telle sorte que
- une dépression (p₀) puisse être appliquée au dispositif de raccordement (11.31), de sorte qu'un fluide entourant le dispositif de mesure angulaire à une pression (p₁) traverse le dispositif de mesure angulaire pour l'évacuation d'impuretés et que
- lorsque la dépression (p₀) est appliquée, un premier débit massique (m₁) du fluide qui s'écoule à travers le conduit d'écoulement (21.1) soit supérieur à un deuxième débit massique (m₂) qui s'écoule à travers l'interstice de palier (S).

2. Dispositif de mesure angulaire selon la revendication 1, dans lequel le palier (11.1, 21, 23, 30) est réalisé sous forme de palier à roulement.

3. Dispositif de mesure angulaire selon la revendication 1 ou 2, dans lequel le palier (11.1, 21, 23, 30) comprend un joint d'étanchéité pour la limitation du deuxième débit massique (m₂) qui s'écoule à travers l'interstice de palier (S).

4. Dispositif de mesure angulaire selon la revendication 3, dans lequel le joint d'étanchéité est configuré sous forme de joint d'étanchéité sans contact.

5. Dispositif de mesure angulaire selon la revendication 1, le palier (11.1, 21, 23, 30) étant réalisé sous forme de palier à roulement comprenant des corps de roulement (30), et comprenant un joint d'étanchéité sans contact pour la limitation du deuxième débit massique (m2) qui s'écoule à travers l'interstice de palier (S), le joint d'étanchéité étant formé par un interstice (Y) et/ou une déviation d'écoulement (U) et l'interstice (Y) et/ou la déviation d'écoulement (U) étant limités par des surfaces qui sont associées à des composants (11.1, 21, 23) qui comprennent en même temps des surfaces de roulement pour les corps de roulement (30).

6. Dispositif de mesure angulaire selon l'une quelconque des revendications précédentes, dans lequel l'arbre (21) comprend le conduit d'écoulement (21.1) qui est traversé par le fluide lorsque la dépression (p₀) est appliquée.

7. Dispositif de mesure angulaire selon l'une quelconque des revendications précédentes, le premier groupe de composants (10) et le deuxième groupe de composants (20) comprenant des composants respectifs (25 ; 11.1) qui sont espacés l'un de l'autre par un interstice (X), et un débit massique (m) étant guidé à travers cet interstice (X), le débit massique (m) étant la somme du premier débit massique (m₁) et du deuxième débit massique (m₂) .

8. Dispositif de mesure angulaire selon l'une quelconque des revendications précédentes, le dispositif de mesure angulaire comprenant un guide de fluide (F) qui peut être traversé par le fluide et dirige le fluide avec une composante directionnelle radiale.

9. Dispositif de mesure angulaire selon l'une quelconque des revendications précédentes, dans lequel le guide de fluide (F) comporte plusieurs évidements (A) dans un composant (25) du premier et/ou du deuxième groupe de composants (10 ; 20).

10. Dispositif de mesure angulaire selon l'une quelconque des revendications précédentes, dans lequel le guide de fluide (F) comporte plusieurs évidements (A) dans le deuxième groupe de composants (20).
